# EUROPEAN PATENT SPECIFICATION

(11) **EP 4 524 540 B1**
(45) Date of publication and mention of the grant of the patent: **28.01.2026**
(21) Application number: 24193789.5
(22) Date of filing: 09.08.2024
(51) Int. Cl.: G01M 3/28

(54) **METHOD FOR PRESSURIZING A SUPPLY LINE OF A FOAM GENERATOR**
VERFAHREN ZUR DRUCKBEAUFSCHLAGUNG EINER ZUFUHRLEITUNG EINES SCHAUMGENERATORS
MÉTHODE DE PRESSURISATION D'UNE CONDUITE D'ALIMENTATION D'UN GÉNÉRATEUR DE MOUSSE

(30) Priority: 12.09.2023 NL 2035781
(43) Date of publication of application: 19.03.2025
(73) Proprietor: Reglerautomatik B.V., 3237 MG Vierpolders (NL)
(72) Inventor: de Voogt, Peter Willem, 3232 TK Brielle (NL)
(74) Representative: 't Jong, Bastiaan Jacob

(56) References cited:
- EP-A1- 3 163 143
- US-A1- 2005 189 027
- US-B2- 9 700 746

## Description

The invention relates to a method for pressurizing a supply line, which is coupled with a first end to the feed opening of a foam generator, which foam generator is arranged close to an upper side of a storage or transfer tank, wherein a restriction is provided in the feed opening of the foam generator and wherein the first end of the supply line lies higher than the second end of the supply line.

Document US 2005/189027, which is comprised in the prior art, discloses a plumbing test plug for use with a threaded test plug inspection portal of a plumbing system, comprising an inflatable test ball.

Storage or transfer tanks, which are used for storage of chemicals and fuels, or K1, K2 and K3 fluids, are provided with a fire extinguishing system. Such a fire extinguishing system is provided with, among other things, foam generators which can arrange a foam layer on the fluid in the tank and so enable any fire to be extinguished. In the event of a fire a mixture of water and foaming agent is pumped via a supply line into the feed opening of the foam generator. A restriction is provided in the feed opening and an air supply is present directly downstream of the restriction, so that mixing of the mixture of water and foaming agent with drawn-in air takes place owing to the venturi effect and foam is so formed.

It is important for a fire extinguishing system to be inspected periodically. The supply lines of the foam generators must here be pressurized to a desired test pressure. When the test pressure does not drop to any considerable extent during a desired testing time, and a visual inspection of the supply line shows no defects, it can be concluded that the supply lines still meet requirements.

In order to enable the supply lines to be pressurized the foam generator must usually be uncoupled from the supply line in order to be able to close the first end of the supply line, or a closure must be arranged in the foam generator itself, for instance a closure of the restriction by means of a blank flange. With such modifications there is a risk that removing the arranged closure again after pressurizing of the supply line will be forgotten. When use must then be made of the foam generator in the event of a fire, it will no longer function.

It is now an object of the invention to reduce or even obviate the above stated drawbacks. This object is achieved according to the invention with a method according to the preamble, which comprises the steps of:
- providing a water supply and a pressure pump;
- providing a ball with a positive buoyancy;
- placing the ball in the second end of the supply line;
- connecting the water supply and pressure pump to the second end of the supply line;
- filling the supply line with water from the water supply, wherein the ball is entrained through the supply line by the water and comes to lie sealingly against the restriction in the feed opening of the foam generator;
- bringing the water in the supply line to a desired test pressure with the pressure pump;
- draining the supply line via the second end after a desired testing time has passed, wherein the ball leaves the supply line along with the water.

Because the ball is entrained with the water when the supply line is filled, the ball will come to lie against the restriction in the feed opening of the foam generator, whereby the restriction is closed. This then makes it possible to increase the pressure in the supply line and so pressurize the supply line. The advantage is that no modifications whatsoever need to be carried out on the foam generator.

After the supply line has been pressurized, the water can flow back out of the supply line and the ball will return with it and exit the supply line. In this way a supply line can be pressurized quickly, after which the fire extinguishing system can be put back into operation. The water and the ball can either flow freely out of the supply line, or the ball can be received in a non-return valve housing which is arranged between the second end and the pressure pump.

A non-return valve, which prevents the fluid from the tank from flowing away again via the supply line in the event that the storage or transfer tank is overfilled, is often provided at the second end of the supply line. When performing the method according to the invention, the non-return valve must be temporarily removed beforehand in order to enable the supply line to be drained. The housing for the non-return valve forms a catch for the ball and furthermore a simple connection point for the pressure gauge.

In an embodiment of the method according to the invention the ball has a diameter at atmospheric pressure which is smaller than the inner diameter of the supply line.

This ensures that the ball does not become stuck in the supply line, particularly when the water runs back out of the line after the pressurizing.

In a further embodiment of the method according to the invention the ball has a diameter at atmospheric pressure which is greater than the main dimension, for instance the diameter, of the restriction in the feed opening of the foam generator. The restriction will usually have a round form, wherein the main dimension is the diameter. In the case however that the restriction is for instance square, the ball will need to have a diameter which is at least equal to the diagonal of the square restriction in order to enable a good seal.

In a highly preferred embodiment of the method according to the invention the ball has a diameter at atmospheric pressure which is greater than half the sum of the inner diameter of the supply line and the main dimension, for instance the diameter, of the restriction in the feed opening of the foam generator. With such a diameter of the ball it will immediately close the restriction when the ball, floating on the water in the supply line, reaches the restriction. With a smaller diameter, there is a chance that the ball does not close the restriction immediately, whereby some water will still be able to end up in the foam generator.

The invention further relates to a combination comprising:
- a storage or transfer tank with a foam generator arranged close to the upper side of the storage or transfer tank for the purpose of generating foam from a water and foaming agent mixture and air, and a supply line which is coupled with a first end to the feed opening of the foam generator, wherein the second end of the supply line is arranged close to the base of the storage or transfer tank and wherein a restriction is provided in the feed opening of the foam generator,
- a water supply and a pressure pump connected to the second end of the supply line; and
- a ball with a positive buoyancy positioned in the supply line;
wherein the supply line is filled with water from the water supply and the ball is pressed sealingly against the restriction by the buoyancy.

It is also possible to provide a separate filling pump with water supply and separate pressure pump with water supply so that, after the supply line has been filled, the filling pump with water supply can already be uncoupled before testing of the supply line with the pressure pump begins.

These and other features of the invention are further elucidated with reference to the accompanying drawings.
Figure 1 shows a perspective view of a storage or transfer tank with a foam generator arranged close to the upper side thereof.
Figure 2 shows a cross-section of the foam generator according to figure 1.
Figures 3A-3D show four steps of an embodiment of the method according to the invention.
Figure 4 shows a schematic representation of a variant of a combination for performing the method according to the invention.

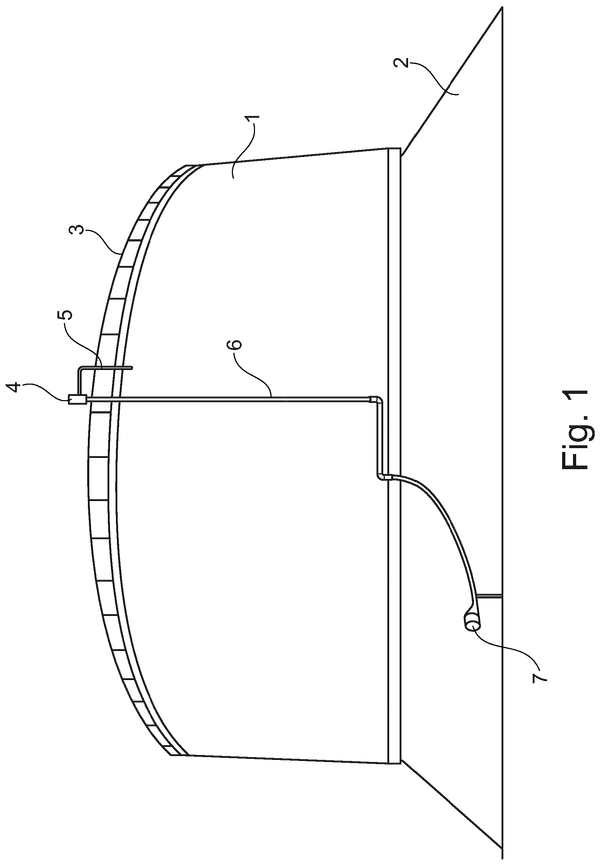

Figure 1 shows a storage or transfer tank 1 in perspective view. The storage or transfer tank 1 is placed on a tank mound 2, which is usually provided in a tank pit, which in turn is surrounded by a tank dike, wall of sheet piling. Arranged on the upper edge of tank 1 is a railing 3, as is a foam generator 4. Foam generator 4 has a discharge line 5 which discharges generated foam in tank 1 and a supply line 6 whereby foam generator 4 can be provided with a mixture of water and foaming agent. Provided on the underside of supply line 6 is a closable coupling 7 to which a fire hose can for instance be coupled.

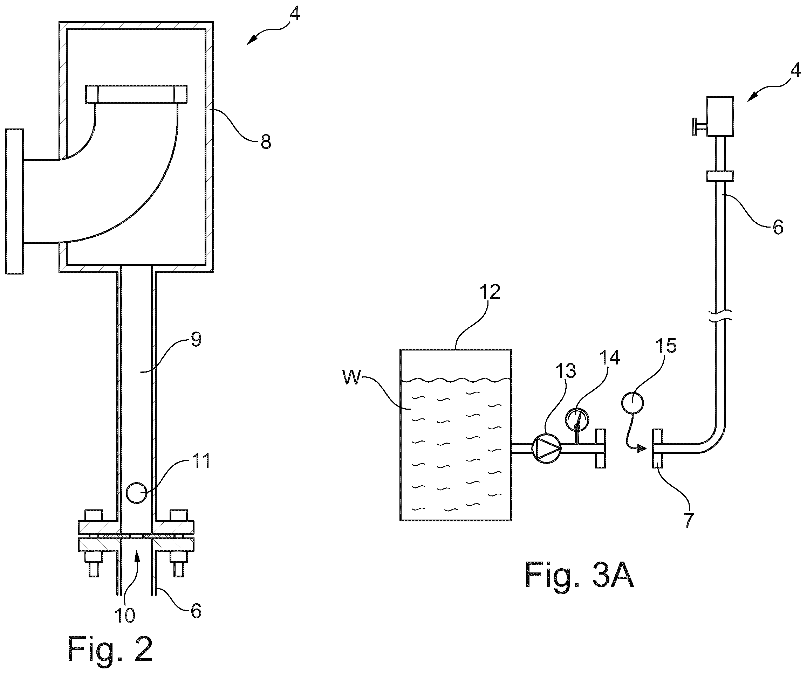

Figure 2 shows a cross-section of foam generator 4. Foam generator 4 has a foam chamber 8 with an upward conduit 9, which is coupled to supply line 6, on the underside. Arranged in the coupling between supply line 6 and upward conduit 9 is a restriction 10 with immediately downstream thereof, in upward conduit 9, an air supply 11. When the mixture of water and foam mixture is pumped through the restriction 10 via supply line 6, air will be entrained via air supply 11 and foam generated as a result of the venturi effect, which foam will end up in the foam chamber 8. Usually provided on the discharge line 5 when foam generator 4 is not in use is a rupture disc which closes discharge line 5 and prevents harmful, flammable and explosive vapours from being able to find their way into the atmosphere from the tank. During use of foam generator 4 the rupture disc will break immediately due to the pressure of the foam and clear a path, so that the foam is able to flow away via discharge line 5 and end up in transfer tank 1.

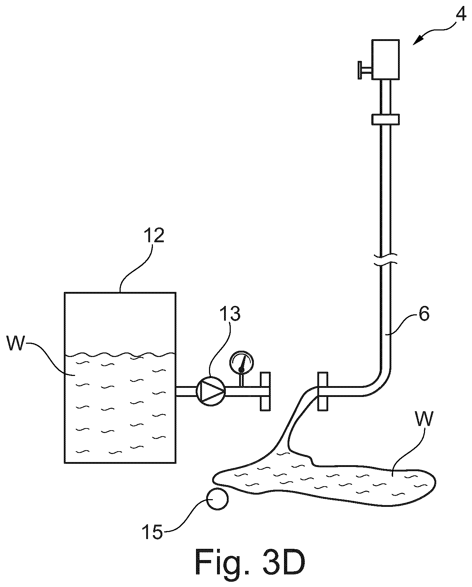

Figures 3A-3D show schematically the different steps of an embodiment for pressurizing the supply line 6.

Figure 3A shows a water supply in the form of a reservoir 12 filled with water W and with coupled thereto a pressure pump 13 and a pressure gauge 14, which is preferably provided with a logger for tracking the measurements during a time period. In the first step a ball 15 with a positive buoyancy is placed via coupling 7 into supply line 6.

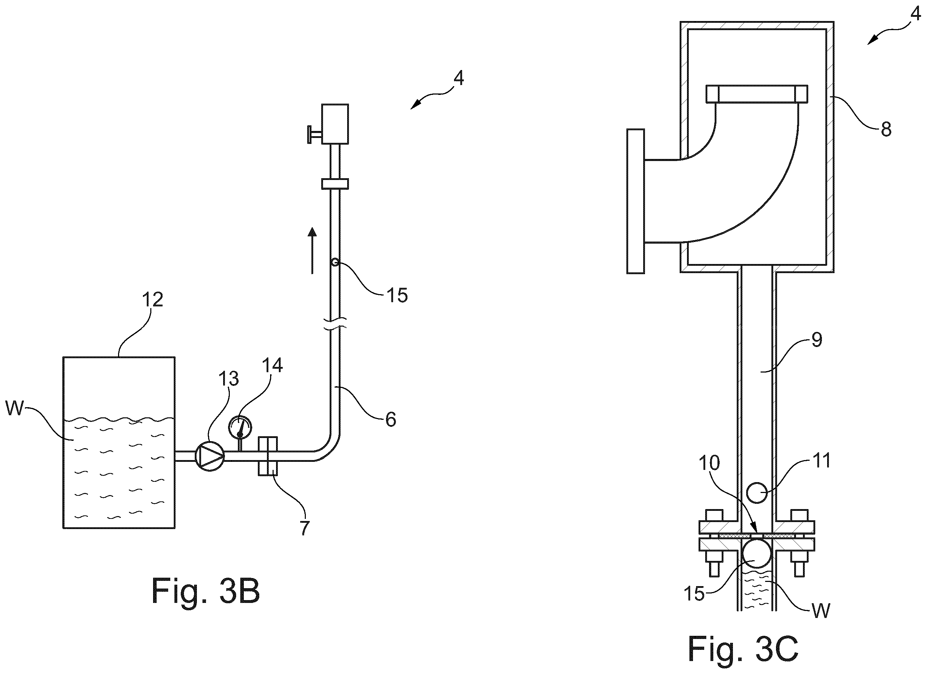

In the subsequent step (see figure 3B) the pressure pump 13 and reservoir 12 are coupled to supply line 6 so that supply line 6 can be filled with water. For this purpose the ball 15, floating on the water, will be pressed upward through supply line 6 toward foam generator 4.

Finally, ball 15 (see figure 3C) will be pressed against the restriction 10 by the water W, whereby foam generator 4 is closed off from the supply line. The pressure can then be raised to a desired test pressure in supply line 6 with pressure pump 13, which pressure can be read on the pressure gauge 14.

After a desired testing time, pressure pump 13 and reservoir 12 can be uncoupled from supply line 6 again, so that the water W flows out of supply line 6. As the water W flows out, the ball 15 will also leave supply line 6 again, after which supply line 6 and foam generator 4 can be put back into operation.

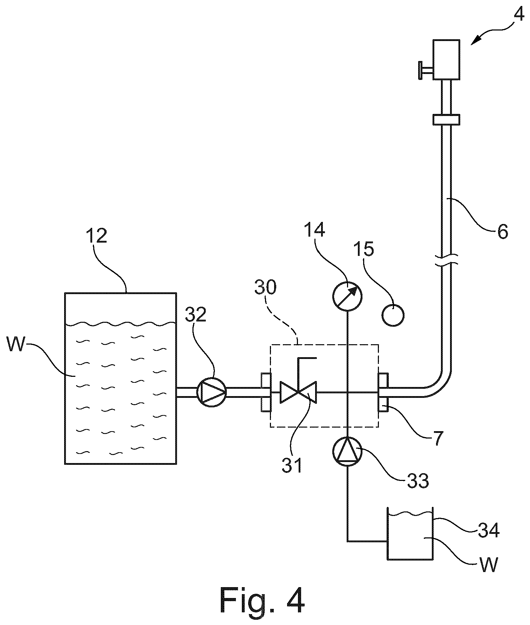

Figure 4 shows a schematic representation of a variant of a combination for performing the method according to the invention. In figure 4 components corresponding with the combination shown in figures 3A-3D are designated with the same reference numerals.

A housing 30 for a non-return valve, in which a shut-off valve 31 is schematically arranged, is arranged on the coupling 7 of supply line 6 for the foam generator 4. Via this housing 30 the ball 15 can be introduced into the supply line 6. A filling pump 32 with a water reservoir 12 is further connected to the shut-off valve 31. A standard fire truck, particularly a fire engine, can usually be used as the filling pump 32 with water reservoir 12.

Further provided between shut-off valve 31 and coupling 7 is the pressure gauge 14 with logger and a pressure pump 33, which can draw in water W from a second reservoir 34.

According to the method, supply line 6 is filled with water W using filling pump 32, wherein the ball 15 is pressed upward to the foam generator 4. When supply line 6 is completely filled, shut-off valve 31 is closed and filling pump 32 with reservoir 12 can be uncoupled. Pressurizing of the supply line 6 can then take place with the pressure pump 33 and the water W from the second reservoir 34. The advantage is that a fire engine need for instance not remain hooked up during the pressurizing and testing of supply line 6.

## Claims

1. Method for pressurizing a supply line (6), which is coupled with a first end to the feed opening of a foam generator (4), which foam generator is arranged close to an upper side of a storage or transfer tank (1), wherein a restriction (10) is provided in the feed opening of the foam generator (4) and wherein the first end of the supply line lies higher than the second end (7) of the supply line (6), which method comprises the steps of:
- providing a water supply (12) and a pressure pump (13);
- providing a ball (15) with a positive buoyancy;
- placing the ball (15) in the second end (7) of the supply line (6);
- connecting the water supply (12) and pressure pump (13) to the second end (7) of the supply line (6);
- filling the supply line (6) with water from the water supply (12), wherein the ball (15) is entrained through the supply line (6) by the water and comes to lie sealingly against the restriction (10) in the feed opening of the foam generator (4);
- bringing the water (W) in the supply line (6) to a desired test pressure with the pressure pump (13);
- draining the supply line (6) via the second end (7) after a desired testing time has passed, wherein the ball (15) leaves the supply line (6) along with the water (W).

2. Method according to claim 1, wherein the ball (15) has a diameter at atmospheric pressure which is smaller than the inner diameter of the supply line (6).

3. Method according to claim 2, wherein the ball (15) has a diameter at atmospheric pressure which is greater than the main dimension, for instance the diameter, of the restriction in the feed opening of the foam generator (4).

4. Method according to claim 3, wherein the ball (15) has a diameter at atmospheric pressure which is greater than half the sum of the inner diameter of the supply line (6) and the main dimension, for instance the diameter, of the restriction in the feed opening of the foam generator (4).

5. Combination comprising:
- a storage or transfer tank (1) with a foam generator (4) arranged close to the upper side of the storage or transfer tank (1) for the purpose of generating foam from a water and foaming agent mixture and air, and a supply line (6) which is coupled with a first end to the feed opening of the foam generator (4), wherein the second end of the supply line (6) is arranged close to the base of the storage or transfer tank (1) and wherein a restriction (10) is provided in the feed opening of the foam generator (4),
- a water supply (12) and a pressure pump (13) connected to the second end (7) of the supply line (6); and
- a ball (15) with a positive buoyancy positioned in the supply line (6);
wherein the supply line (6) is filled with water (W) from the water supply (12) and the ball (15) is pressed sealingly against the restriction (10) by the buoyancy.

## Patentansprüche

1. Verfahren zur Druckbeaufschlagung einer Zufuhrleitung (6), die mit einem ersten Ende mit der Beschickungsöffnung eines Schaumgenerators (4) gekoppelt ist, wobei der Schaumgenerator nahe einer Oberseite eines Lager- oder Transfertanks (1) angeordnet ist, wobei in der Beschickungsöffnung des Schaumgenerators (4) eine Verengung (10) bereitgestellt ist und wobei das erste Ende der Zufuhrleitung höher liegt als das zweite Ende (7) der Zufuhrleitung (6), wobei das Verfahren die folgenden Schritte umfasst:
- Bereitstellen einer Wasserzufuhr (12) und einer Druckpumpe (13);
- Bereitstellen einer Kugel (15) mit einem positivem Auftrieb;
- Platzieren der Kugel (15) im zweiten Ende (7) der Zufuhrleitung (6);
- Verbinden der Wasserzufuhr (12) und der Druckpumpe (13) mit dem zweiten Ende (7) der Zufuhrleitung (6);
- Befüllen der Zufuhrleitung (6) mit Wasser aus der Wasserzufuhr (12), wobei die Kugel (15) durch das Wasser durch die Zufuhrleitung (6) mitgetragen wird und dichtend an der Verengung (10) in der Beschickungsöffnung des Schaumgenerators (4) zum Liegen kommt;
- Bringen des Wassers (W) in der Zufuhrleitung (6) mit der Druckpumpe (13) auf einen gewünschten Prüfdruck;
- Entleeren der Zufuhrleitung (6) über das zweite Ende (7), nachdem eine gewünschte Prüfzeit vergangen ist, wobei die Kugel (15) die Zufuhrleitung (6) zusammen mit dem Wasser (W) verlässt.

2. Verfahren nach Anspruch 1, wobei die Kugel (15) bei atmosphärischem Druck einen Durchmesser aufweist, der kleiner ist als der Innendurchmesser der Zufuhrleitung (6).

3. Verfahren nach Anspruch 2, wobei die Kugel (15) bei atmosphärischem Druck einen Durchmesser aufweist, der größer ist als die Hauptabmessung, beispielsweise der Durchmesser der Verengung in der Beschickungsöffnung des Schaumgenerators (4).

4. Verfahren nach Anspruch 3, wobei die Kugel (15) bei atmosphärischem Druck einen Durchmesser aufweist, der größer ist als die Hälfte der Summe aus dem Innendurchmesser der Zufuhrleitung (6) und der Hauptabmessung, beispielsweise dem Durchmesser der Verengung in der Beschickungsöffnung des Schaumgenerators (4).

5. Kombination, umfassend:
- einen Lager- oder Transfertank (1) mit einem Schaumgenerator (4), der nahe der Oberseite des Lager- oder Transfertanks (1) angeordnet ist, zum Zwecke des Erzeugens von Schaum aus einem Gemisch aus Wasser und Schaummittel und Luft, und eine Zufuhrleitung (6), die mit einem ersten Ende mit der Beschickungsöffnung des Schaumgenerators (4) gekoppelt ist, wobei das zweite Ende der Zufuhrleitung (6) nahe der Basis des Lager- oder Transfertanks (1) angeordnet ist und wobei in der Beschickungsöffnung des Schaumgenerators (4) eine Verengung (10) bereitgestellt ist,
- eine Wasserzufuhr (12) und eine Druckpumpe (13), die mit dem zweiten Ende (7) der Zufuhrleitung (6) verbunden sind; und
- eine Kugel (15) mit einem positivem Auftrieb, die in der Zufuhrleitung (6) positioniert ist;
wobei die Zufuhrleitung (6) mit Wasser (W) aus der Wasserzufuhr (12) befüllt wird und die Kugel (15) durch den Auftrieb dichtend an die Verengung (10) gedrückt wird.

## Revendications

1. Procédé de pressurisation d'une conduite d'alimentation (6), qui est couplée par une première extrémité à l'ouverture d'alimentation d'un générateur de mousse (4), lequel générateur de mousse est disposé près d'un côté supérieur d'un réservoir de stockage ou de transfert (1), dans lequel un étranglement (10) est prévu dans l'ouverture d'alimentation du générateur de mousse (4) et dans lequel la première extrémité de la conduite d'alimentation est plus haute que la seconde extrémité (7) de la conduite d'alimentation (6), lequel procédé comprend les étapes suivantes :
- la fourniture d'une alimentation en eau (12) et d'une pompe à pression (13)
- la fourniture d'une boule (15) avec une flottabilité positive ;
- le placement de la boule (15) dans la seconde extrémité (7) de la conduite d'alimentation (6) ;
- le raccordement de l'alimentation en eau (12) et de la pompe à pression (13) à la seconde extrémité (7) de la conduite d'alimentation (6) ;
- le remplissage de la conduite d'alimentation (6) avec de l'eau provenant de l'alimentation en eau (12), dans lequel la boule (15) est entraînée à travers la conduite d'alimentation (6) par l'eau et vient reposer de manière étanche contre l'étranglement (10) dans l'ouverture d'alimentation du générateur de mousse (4) ;
- le fait d'amener l'eau (W) dans la conduite d'alimentation (6) à une pression d'essai souhaitée avec la pompe à pression (13) ;
- l'évacuation de la conduite d'alimentation (6) via la seconde extrémité (7) après qu'un temps de test souhaité s'est écoulé, dans lequel la boule (15) quitte la conduite d'alimentation (6) avec l'eau (W).

2. Procédé selon la revendication 1, dans lequel la boule (15) présente un diamètre à pression atmosphérique qui est inférieur au diamètre intérieur de la conduite d'alimentation (6).

3. Procédé selon la revendication 2, dans lequel la boule (15) présente un diamètre à la pression atmosphérique qui est supérieur à la dimension principale, par exemple le diamètre, de l'étranglement dans l'ouverture d'alimentation du générateur de mousse (4).

4. Procédé selon la revendication 3, dans lequel la boule (15) présente un diamètre à la pression atmosphérique qui est supérieur à la moitié de la somme du diamètre intérieur de la conduite d'alimentation (6) et de la dimension principale, par exemple le diamètre, de l'étranglement dans l'ouverture d'alimentation du générateur de mousse (4).

5. Combinaison comprenant :
- un réservoir de stockage ou de transfert (1) avec un générateur de mousse (4) disposé près du côté supérieur du réservoir de stockage ou de transfert (1) dans le but de générer de la mousse à partir d'un mélange d'eau et d'agent moussant et d'air, et une conduite d'alimentation (6) qui est couplée par une première extrémité à l'ouverture d'alimentation du générateur de mousse (4), dans laquelle la seconde extrémité de la conduite d'alimentation (6) est disposée près de la base du réservoir de stockage ou de transfert (1) et dans laquelle un étranglement (10) est prévu dans l'ouverture d'alimentation du générateur de mousse (4),
- une alimentation en eau (12) et une pompe à pression (13) raccordées à la seconde extrémité (7) de la conduite d'alimentation (6) ; et
- une boule (15) avec une flottabilité positive positionnée dans la conduite d'alimentation (6) ;
dans laquelle la conduite d'alimentation (6) est remplie d'eau (W) provenant de l'alimentation en eau (12) et la boule (15) est pressée de manière étanche contre l'étranglement (10) par la flottabilité.
